# EUROPÄISCHE PATENTSCHRIFT

(11) **EP 1 145 255 B1**
(45) Veröffentlichungstag und Bekanntmachung des Hinweises auf die Patenterteilung: **18.10.2006**
(21) Anmeldenummer: 00947809.0
(22) Anmeldetag: 15.06.2000
(51) Int. Cl.: H01C 7/04

(54) **HEIZLEITER, INSBESONDERE FÜR EINEN MESSFÜHLER, UND EIN VERFAHREN ZUR HERSTELLUNG DES HEIZLEITERS**
HEAT CONDUCTOR, ESPECIALLY FOR A SENSOR, AND METHOD FOR PRODUCING SUCH A HEAT CONDUCTOR
CONDUCTEUR CHAUFFANT, NOTAMMENT POUR CAPTEUR, ET PROCEDE POUR FABRIQUER LEDIT CONDUCTEUR CHAUFFANT

(30) Priorität: 13.07.1999 DE 19932545
(43) Veröffentlichungstag der Anmeldung: 17.10.2001
(73) Patentinhaber: ROBERT BOSCH GMBH, 70442 Stuttgart (DE)
(72) Erfinder: HEIMANN, Detlef, D-70839 Gerlingen (DE); REINSCH, Bernd, D-71642 Ludwigsburg (DE); BISCHOFF, Alexander, D-71735 Eberdingen (DE); WERNER, Juergen, D-70771 Leinfelden-Echterdingen (DE); DIEHL, Lothar, D-70499 Stuttgart (DE)
(86) Internationale Anmeldenummer: PCT/DE2000/001990
(87) Internationale Veröffentlichungsnummer: WO 2001/004915

(56) Entgegenhaltungen:
- EP-A- 0 859 233
- US-A- 5 142 266
- US-A- 5 787 866
- PATENT ABSTRACTS OF JAPAN vol. 012, no. 132 (C-490), 22. April 1988 (1988-04-22) & JP 62 250151 A (ALPS ELECTRIC CO LTD), 31. Oktober 1987 (1987-10-31)
- PATENT ABSTRACTS OF JAPAN vol. 1996, no. 03, 29. März 1996 (1996-03-29) & JP 07 290198 A (NITTETSU HARD KK), 7. November 1995 (1995-11-07)

## Beschreibung

Die Erfindung betrifft einen Heizleiter, insbesondere für einen Meßfühler, und ein Verfahren zur Herstellung des Heizleiters mit den im Oberbegriff der Patentansprüche 1 und 9 genannten Merkmalen.

### Stand der Technik

Heizleiter der angesprochenen Art sind bekannt und werden zur Einstellung einer vorgebbaren Betriebstemperatur des Meßfühlers benutzt. Solche Meßfühler zeichnen sich durch einen vorzugsweise schichtweisen Aufbau aus, wobei einzelne Schichten durch Siebdruck, Laminieren, Stanzen, Sintern oder dergleichen erhalten werden. Dient der Meßfühler zur Bestimmung einer Sauerstoffkonzentration von Abgasen einer Verbrennungskraftmaschine, so beinhaltet er im wesentlichen die folgenden Merkmale:

Eine Meßelektrode ist an einer Oberfläche des Meßfühlers angeordnet und gegebenenfalls von einer porösen Schutzschicht bedeckt. Unterhalb der Meßelektrode befindet sich eine Schicht aus einem Festelektrolyten, der eine Referenzelektrode folgt. Die Referenzelektrode liegt wiederum an einem Referenzgaskanal, der mit einem Referenzgas gefüllt ist. Um das Sensorelement auf eine vorgebbare Temperatur zu bringen, ist unterhalb des Referenzgaskanals der-Heizleiter angeordnet, der gegebenenfalls durch einen elektrischen Isolator ummantelt ist. Die Elektroden sowie der Heizleiter werden üblicherweise durch Sintern eines Gemisches aus einem Metalloxidpulver und eines Metallpulvers hergestellt (Cermet).

Bei der Herstellung eines solchen Meßfühlers muß zum einen beachtet werden, daß die Meß- und Referenzelektrode eine hinreichende Porosität aufweisen, da - ohne an dieser Stelle näher auf eine Funktionsweise eines solchen Meßfühlers einzugehen - eine ausreichend große 3-Phasen-Grenzfläche zur Gewährung der Funktionalität gegeben sein muß. Um ein Dichtsintern (geringe Porosität) der Meß- und Referenzelektroden zu verhindern, müssen daher entsprechend niedrige Sintertemperaturen gewählt werden.

Zum anderen muß der Heizleiter eine ausreichende Stromtragfähigkeit besitzen, die um so günstiger ist, je geringer die Porosität des Heizleiters ist. Daher ist für die Herstellung des Heizleiters eine möglichst hohe Sintertemperatur bevorzugt.

Bekannte Heizleiter bestehen üblicherweise aus einem Cermet aus Platin und einem Metalloxid, wie beispielsweise Aluminiumoxid. Aus der US 5,787,866 ist es bekannt, den Heizleiter aus Platin Pt und einem weiteren Edelmetall der Gruppe Rh, Pd, Ir, Ru und Os herzustellen, um seine Beständigkeit gegenüber korrosiven Prozessen zu erhöhen. Da die Meß- und Referenzelektroden bevorzugt ebenfalls Platin als metallische Komponente besitzen, kann die Sintertemperatur nur als ein Kompromiß zwischen beiden Zielstellungen hinsichtlich der Porosität gewählt werden.

Weiterhin ist nachteilig, daß die bekannten Heizleiter infolge einer Oxidation des Platins und einer Koagulation des Pt eine nur unzureichende Betriebsstabilität besitzen. Aufgrund solcher Alterungsprozesse kann es zu einem Totalausfall des Meßfühlers kommen.

Ferner ist nachteilig, daß bei der Herstellung der bekannten Heizleiter durch Sintern ein Einfluß von unvermeidbaren Temperaturunterschieden im Sinterofen sowie die Dauer einer Temperaturbehandlung auf den Widerstand des Heizleiters schwer steuerbar sind.

### Vorteile der Erfindung

Erfindungsgemäß werden die geschilderten Nachteile durch den Heizleiter mit den Merkmalen des Anspruchs 1 und durch ein Verfahren zur Herstellung eines solchen Heizleiters mit den Merkmalen des Anspruchs 7 behoben. Dadurch, daß dem Cermet zumindest zwei weitere Edelmetalle zugesetzt werden, kann einerseits eine niedrigere Sintertemperatur gewählt werden, bei der der Heizleiter eine hinreichend niedrige Porosität besitzt, und andererseits wird der Einfluß der Temperaturschwankungen im Sinterofen zurückgedrängt. Weiterhin zeigt ein solcher Heizleiter eine wesentlich geringere Oxidationsanfälligkeit, so daß der Heizleiter eine erhöhte Lebensdauer aufweist.

Als besonders vorteilhaft hat es sich erwiesen, die weiteren Edelmetalle aus der Gruppe Pd, Rh, Au, Ag und Ir zu wählen. Dabei sollte das Cermet die Zusammensetzung
(a) 0,5 bis 50 Gew% Metalloxid,
(b) 35 bis 95 Gew% Platin,
(c) 0,5 bis 30 Gew% der weiteren Edelmetalle
aufweisen, wobei die genannten Mengen auf die Gesamtmenge der Komponenten (a), (b) und (c) bezogen sind. Insbesondere eine Zusammensetzung des Cermets von 6,6 Gew% Rh und 3,3 Gew% Au sowie entweder 88,1 Gew% Pt und 2 Gew% Al₂O₃ oder 80,7 Gew% Pt und 9,4 Gew% Al₂O₃ haben sich als besonders vorteilhaft hinsichtlich des Widerstandes und der Herstellung des Heizleiters erwiesen.

In Abhängigkeit von der Ausgestaltung des Sinterverfahrens und/oder einer Beschaffenheit der eingesetzten Metalle zur Herstellung des Cermets ist es möglich, eine Verteilung der Metallkomponenten im Cermet zu beeinflussen. So ist es denkbar, daß gezielt Cermets hergestellt werden, in denen heterogene Legierungen zwischen Platin und den weiteren Edelmetallen vorliegen. Auf diese Weise kann der Widerstand des Heizleiters zusätzlich beeinflußt werden.

Ferner können die bei einer Herstellung des Heizleiters notwendigen Verfahrensmaßnahmen hinsichtlich einer Verwendung von Platin-Edelmetall-Legierungen in bevorzugter Weise ausgestaltet werden. So können Edelmetalle sich aufgrund ihres hohen Dampfdrucks während des Sinterns auch im Bereich der Meß- und Referenzelektroden abscheiden. Dies kann infolge einer oft hohen CO-Affinität der Edelmetalle zu einer Meßwertverfälschung des Meßfühlers führen. Zum einen kann dies bei der Sinterung in dem Sinterofen vermieden werden, wenn ein hinreichend großer Luftaustausch, beispielsweise durch ein Gebläse, gewährt wird. Vorteilhaft ist es dabei, in dem Sinterofen Kondensationsbereiche für das Edelmetall einzubringen.

Zum anderen kann der Sinterofen derart ausgelegt werden, daß innerhalb des Sensorelementes im Ofen ein Temperaturgradient vorhanden ist. Dabei wird der Meßfühler derart in dem Sinterofen angeordnet, daß der Heizleiter sich in einem Bereich mit der niedrigsten Temperatur befindet, so daß ein Kondensieren des Edelmetalls lediglich in diesem Bereich erfolgt.

Weitere bevorzugte Ausgestaltungen der Erfindung ergeben sich aus den übrigen, in den Unteransprüchen genannten Merkmalen.

### Zeichnung

Die Erfindung wird nachfolgend in einem Ausführungsbeispiel anhand der zugehörigen Zeichnung, die einen Meßfühler 12 in einer schematischen Schnittansicht zeigt, näher erläutert.

### Beschreibung des Ausführungsbeispiels

Der Meßfühler 12 besitzt einen Heizleiter 10, der von einem elektrischen Isolator 24 umgeben ist. Ferner weist der Meßfühler 12 eine Meßelektrode 14 auf, die gegebenenfalls von einer porösen Schutzschicht 22 bedeckt wird. Unterhalb der Meßelektrode 14 befindet sich eine Schicht 20 aus einem Festelektrolyten und nachfolgend einer Referenzelektrode 16. Die Referenzelektrode 16 liegt wiederum an einem mit einem Referenzgas gefüllten Referenzgaskanal 18.

Ein solcher Meßfühler 12 wird üblicherweise zur Bestimmung einer Sauerstoffkonzentration, insbesondere in Abgasen von Verbrennungskraftmaschinen eingesetzt. Dazu wird ein Potential, das sich infolge des Sauerstoffgehalts des Abgases an der Meßelektrode 14 einstellt, mit einem Potential an der Referenzelektrode 16 verglichen. Das Potential an der Referenzelektrode 16 ist unter anderem abhängig von der Sauerstoffkonzentration im Referenzgas und der Temperatur. Durch den Heizleiter 10 kann nun eine Einstellung der Temperatur erfolgen.

Die Funktionsweise eines solchen Meßfühlers 12 ist bekannt und in diesem Zusammenhang sei hier daher lediglich darauf hingewiesen, daß die Meß- und Referenzelektroden 14, 16 eine ausreichende Porosität aufweisen müssen, um eine ausreichend große 3-Phasen-Grenzfläche zu besitzen. Im Bereich der 3-Phasen-Grenzfläche erfolgt vereinfacht gesehen die Einstellung des Potentials der Meß- und Referenzelektroden 14, 16.

Weiterhin ist es zur Gewährung einer hinreichenden Stromtragfähigkeit des Heizleiters 10 notwendig, dessen Porosität möglichst gering zu halten. Die Porosität kann wesentlich durch die Höhe der Sintertemperatur beeinflußt werden. Hohe Sintertemperaturen führen dabei zu einem Dichtsintern des Heizleiters 10, aber auch der Elektroden 14, 16.

Der Meßfühler 12 zeichnet sich durch seinen vorzugsweise schichtweisen Aufbau aus, wobei die einzelnen Schichten durch Siebdruck, Laminieren, Stanzen, Sintern oder dergleichen erhalten werden. Beim Siebdrucken werden dabei Pasten auf eine Keramikfolie aufgetragen, die nach dem Sintern die einzelnen Schichten bilden. Die Elektroden 14, 16 und der Heizleiter 10 werden dabei aus Schichten gebildet, die aus einem Cermet bestehen, wobei ein Metalloxid als Stützgerüst und ein Metall als Leiter verwendet werden. Dazu wird eine die Schicht ergebende Paste aus einem Metallpulver und einem Metalloxidpulver auf einen Träger aufgebracht und anschließend gesintert.

In den bekannten Meßfühlern 12 wird als Metall für den Heizleiter 10 und die Elektroden 14, 16 Platin verwendet und als keramisches Material wird bei Heizleitern 12 bevorzugt Aluminiumoxid eingesetzt. In den Elektroden 14, 16 wird als keramisches Material Zr0₂ verwendet.

Durch eine Beimengung zumindest zwei weiterer Edelmetalle zu der Paste, die den Heizleiter 10 bilden soll, kann das Dichtsintern des Heizleiters 10 bei einer wesentlich niedrigeren Sintertemperatur als bei einer Verwendung von reinem Platin realisiert werden. Nach dem Sintern kann dann eine zumindest ternäre Platin-Edelmetall-Legierung vorliegen.

Die weiteren Edelmetalle werden aus der Gruppe Pd, Rh, Au, Ag und Ir gewählt. Insgesamt soll das Cermet eine Zusammensetzung von
(a) 0,5 bis 50 Gew% Metalloxid,
(b) 35 bis 95 Gew% Platin,
(c) 0,5 bis 30 Gew% der weiteren Edelmetalle
aufweisen, wobei die genannten Mengen auf die Gesamtmenge bezogen sind. Beispielhaft zeigte dabei ein Cermet mit der Zusammensetzung Pt 88,1 Gew%, Al₂O₃ 2 Gew%, Rh 6,6 Gew% und Au 3,3 Gew% einen Widerstand von 3,6 Ω. Erhöhte sich der Anteil von Al₂O₃ auf 9,4 Gew% und erniedrigte sich der Anteil von Pt auf 80,7 Gew%, so stieg der Widerstand auf 9 Ω.

Der Anteil des Metalloxids, insbesondere Aluminiumoxid, am Cermet beträgt 0,5 bis 50 Gew%. Dabei zeigte es sich, daß unabhängig von einer Erhöhung eines Widerstands des Heizleiters 10 durch einen erhöhten keramischen Materialanteil zusätzlich eine Widerstandserhöhung durch das Zulegieren erfolgt.

Die Edelmetalle können auf verschiedene Weise in das Verfahren eingeführt werden. So ist es möglich, diese direkt als ein Pulver der Paste beizumengen. Daneben bietet sich an, mit den Edelmetallen bereits vorlegierte Platinpulver einzusetzen oder die Edelmetalle beispielsweise durch chemische Prozesse oder Vermahlen als eine Schicht auf die Körner des Platinpulvers aufzubringen. Letzteres Verfahren kann dazu führen, daß sich während des Sinterprozesses lediglich in einem Kontaktbereich der Körner die bevorzugt niedrig schmelzendere Legierung ausbildet, so daß nach dem Sintern insgesamt eine heterogene, zumindest ternäre Platin-Edelmetall-Legierung vorliegt. Dies kann insbesondere vorteilhaft sein, wenn die eingesetzten Edelmetalle zu einer Erniedrigung eines Temperaturkoeffizienten führen würden und somit bei einer gegebenen Heizspannung nur eine geringere Heizleistung in der Sensorelementspitze erreicht werden kann. Durch den Einsatz einer heterogenen Platin-Edelmetall-Legierung kann ein solcher Effekt weitestgehend vermieden werden.

Während der Herstellung des Heizleiters 10, insbesondere in einem Sinterofen, wird die Sintertemperatur in Abhängigkeit von wenigstens einer der Schmelztemperaturen der Edelmetalle oder der Platin-Edelmetall-Legierung gewählt. Da diese niedriger liegen als die Schmelztemperatur des Platins, erfolgt nun bei bereits wesentlich niedrigeren Temperaturen ein Dichtsintern des Heizleiters 10. Aufgrund der niedrigeren Temperaturen wird ebenso vermieden, daß vorhandene Meß- und Referenzelektroden 14, 16 ihre Porosität verlieren.

Während des Sinterprozesses können einige der eingesetzten Edelmetalle aufgrund ihres teils hohen Dampfdruckes in die Gasphase übergehen. Die entstandenen Edelmetalldämpfe können nun wiederum in verschiedenen Bereichen des Meßfühlers 12 kondensieren. Unter anderem kann dies im Bereich der Meß- und Referenzelektroden 14, 16 erfolgen. Da Edelmetalle, wie beispielsweise Gold, eine sehr hohe Affinität zu Gasen wie Kohlenmonoxid besitzen, kann es zu einer Belegung einer Oberfläche der Elektroden 14, 16 kommen und dies führt zu verfälschten Meßergebnissen des Meßfühlers 12.

Eine solche Elektrodenvergiftung kann auf zweierlei Weise vermieden werden. Zum einen muß ein hinreichend großer Luftaustausch während des Sinterprozesses im Bereich des Trägers stattfinden. Dies kann beispielsweise mit Hilfe eines geeigneten Gebläses am Sinterofen bewerkstelligt werden. Vorteilhafterweise ist der Sinterofen in einem solchen Fall mit einem Kondensationsbereich ausgestattet, an dem sich die gasförmigen Edelmetalle abscheiden lassen.

Zum anderen kann der Sinterofen derart ausgelegt werden, daß er einen Temperaturgradienten im Bereich der Keramikfolie während des Sinterprozesses aufweist und die Temperatur im Bereich der den Heizleiter 10 bildenden Paste am niedrigsten ist. Insgesamt kann durch die beiden Verfahren eine Kondensation gasförmiger Edelmetalle im Bereich der Meß- und Referenzelektroden 14, 16 vermieden werden.

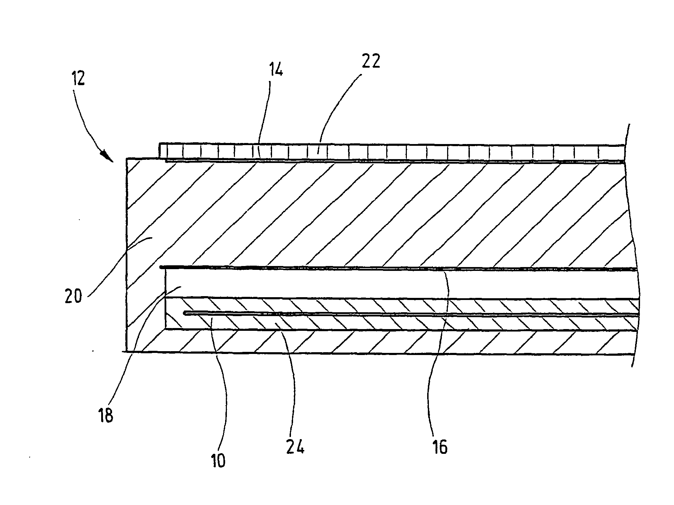

## Patentansprüche

1. Heizleiter, insbesondere für einen Messfühler, zum Bestimmen von wenigstens einer Gaskomponente in Abgasen von Verbrennungskraftmaschinen, wobei der Heizleiter aus einem Cermet gebildet ist, das Platin und zumindest ein Metalloxid enthält, **dadurch gekennzeichnet, dass** dem Cermet zumindest zwei weitere Edelmetalle zugesetzt sind, dass die Metalle aus der Gruppe Pd, Rh, Au, Ag und Ir ausgewählt sind, und dass das Cermet eine Zusammensetzung von
(a) 0,5 bis 50 Gew% Metalloxid,
(b) 35 bis 95 Gew% Platin
(c) 0,5 bis 30 Gew% der zumindest zwei weiteren Edelmetalle
aufweist und wobei die genannten Mengen auf die Gesamtmenge der Komponenten (a), (b) und (c) bezogen sind.

2. Heizleiter nach Anspruch 1, **dadurch gekennzeichnet, dass** Platin und die weiteren Edelmetalle als eine homogene Legierung vorliegen.

3. Heizleiter nach Anspruch 1, **dadurch gekennzeichnet, dass** Platin und die weiteren Edelmetalle als eine heterogene Legierung vorliegen.

4. Heizleiter nach Anspruch 1, **dadurch gekennzeichnet, dass** das Metalloxid Aluminiumoxid ist.

5. Heizleiter nach Anspruch 1, **dadurch gekennzeichnet, dass** das Cermet eine Zusammensetzung von 6,6 Gew% Rh, 3,3 Gew% Au, 2 Gew% Al₂O₃ und 88, 1 Gew% Pt aufweist.

6. Heizleiter nach Anspruch 1, **dadurch gekennzeichnet, dass** das Cermet eine Zusammensetzung von 6,6 Gew% Rh, 3,3 Gew% Au, 9,4 Gew% Al₂O₃ und 80,7 Gew% Pt aufweist.

7. Verfahren zur Herstellung eines Heizleiters für einen Messfühler zum Bestimmen einer Sauerstoffkonzentration, insbesondere in Abgasen von Verbrennungskraftmaschinen, wobei eine den Heizleiter ergebende Paste, die ein Platinpulver und ein Metalloxidpulver umfasst, auf eine Keramikfolie aufgebracht und anschließende gesintert wird, **dadurch gekennzeichnet, dass** die Paste wenigstens zwei weitere Edelmetalle oder eine zumindest ternäre Platin-Edelmetall-Legierung umfasst, wobei die Metalle aus der Gruppe Pd, Rh, Au, Ag und Ir ausgewählt sind, und dass das Cermet eine Zusammensetzung von
(a) 0,5 bis 50 Gew% Metalloxid,
(b) 35 bis 95 Gew% Platin
(c) 0,5 bis 30 Gew% der zumindest zwei weiteren Edelmetalle aufweist und wobei die genannten Mengen auf die Gesamtmenge der Komponenten (a), (b) und (c) bezogen sind, und dass eine Sintertemperatur in Abhängigkeit von wenigstens einer Schmelztemperatur der Edelmetalle oder der Platin-Edelmetall-Legierung gewählt wird.

8. Verfahren nach Anspruch 7, **dadurch gekennzeichnet, dass** das Sintern in einem Sinterofen erfolgt und während des Sinterns ein Luftaustausch im Bereich der Keramikfolien stattfindet.

9. Verfahren nach Anspruch 8, **dadurch gekennzeichnet, dass** der Sinterofen einen Kondensationsbereich aufweist, an dem sich gasförmige Edelmetalle abscheiden lassen.

10. Verfahren nach Anspruch 7, **dadurch gekennzeichnet, dass** der Sinterofen während des Sinterns einen Temperaturgradienten im Bereich der Keramikfolie aufweist und die Temperatur im Bereich der den Heizleiter (10) bildenden Paste am niedrigsten ist.

11. Verfahren nach den Ansprüchen 7 bis 10, **dadurch gekennzeichnet, dass** die Edelmetalle als ein Pulver der Paste zugesetzt werden.

12. Verfahren nach den Ansprüchen 7 bis 10, **dadurch gekennzeichnet, dass** die Edelmetalle durch chemische Prozesse oder Vermahlen auf einer Oberfläche der Körner des Platinpulvers aufgebracht werden.

13. Verfahren nach den Ansprüchen 7 bis 10, **dadurch gekennzeichnet, dass** das Platin und die Edelmetalle in Form einer pulverisierten, ternären Platin-Edelmetall-Legierung der Paste zugesetzt werden.

## Claims

1. Heating conductor, in particular for a measurement sensor, for determining at least one gas component in exhaust gases from internal combustion engines, the heating conductor being formed from a cermet which contains platinum and at least one metal oxide, **characterized in that** at least two further precious metals are added to the cermet, **in that** the metals are selected from the group consisting of Pd, Rh, Au, Ag and Ir, and **in that** the cermet has a composition of
(a) 0.5 to 50% by weight metal oxide,
(b) 35 to 95% by weight platinum,
(c) 0.5 to 30% by weight of the at least two further precious metals,
and the abovementioned quantities being based on the total quantity of components (a), (b) and (c).

2. Heating conductor according to Claim 1, **characterized in that** platinum and the further precious metals are present in the form of a homogeneous alloy.

3. Heating conductor according to Claim 1, **characterized in that** platinum and the further precious metals are present in the form of a heterogeneous alloy.

4. Heating conductor according to Claim 1, **characterized in that** the metal oxide is aluminium oxide.

5. Heating conductor according to Claim 1, **characterized in that** the cermet has a composition of 6.6% by weight Rh, 3.3% by weight Au, 2% by weight Al₂O₃ and 88.1% by weight Pt.

6. Heating conductor according to Claim 1, **characterized in that** the cermet has a composition of 6.6% by weight Rh, 3.3% by weight Au, 9.4% by weight Al₂O₃ and 80.7% by weight Pt.

7. Process for producing a heating conductor for a measurement sensor for determining an oxygen concentration, in particular in exhaust gases from internal combustion engines, in which a paste which results in the heating conductor and comprises a platinum powder and a metal oxide powder is applied to a ceramic tape and is then sintered, **characterized in that** the paste comprises at least two further precious metals or an at least ternary platinum/precious metal alloy, the metals being selected from the group consisting of Pd, Rh, Au, Ag and Ir, and **in that** the cermet has a composition of
(a) 0.5 to 50% by weight metal oxide,
(b) 35 to 95% by weight platinum,
(c) 0.5 to 30% by weight of the at least two further precious metals,
and wherein the abovementioned quantities are based on the total quantity of components (a), (b) and (c), and **in that** a sintering temperature is selected as a function of at least one melting temperature of the precious metals or the platinum/precious metal alloy.

8. Process according to Claim 7, **characterized in that** the sintering is carried out in a sintering furnace and during sintering air exchange takes place in the region of the ceramic tapes.

9. Process according to Claim 8, **characterized in that** the sintering furnace has a condensation region, at which gaseous precious metals can be precipitated.

10. Process according to Claim 7, **characterized in that** during the sintering the sintering furnace has a temperature gradient in the region of the ceramic tape, and the temperature is lowest in the region of the paste which forms the heating conductor (10).

11. Process according to Claims 7 to 10, **characterized in that** the precious metals are added to the paste in the form of a powder.

12. Process according to Claims 7 to 10, **characterized in that** the precious metals are applied to a surface of the grains of the platinum powder by chemical processes or milling.

13. Process according to Claims 7 to 10, **characterized in that** the platinum and the precious metals are added to the paste in the form of a pulverized, ternary platinum/precious metal alloy.

## Revendications

1. Conducteur chauffant, en particulier destiné à un capteur de mesure, pour déterminer au moins un composant gazeux dans les gaz d'échappement de moteurs à combustion interne, ce conducteur étant constitué d'un cermet qui contient du platine et au moins un oxyde métallique,
**caractérisé en ce qu'**
on ajoute au moins deux autres métaux nobles au cermet, ces métaux sont choisis parmi le groupe constitué de Pd, Rh, Au, Ag et Ir et le cermet présente une composition de
(a) 0,5 à 50 % en poids d'oxyde métallique,
(b) 35 à 95 % en poids de platine,
(c) 05 à 30 % en poids des, au moins deux, autres métaux nobles, les quantités indiquées étant rapportées à la quantité totale des composants (a), (b) et (c).

2. Conducteur chauffant selon la revendication 1,
**caractérisé en ce que**
le platine et les autres métaux nobles se présentent sous la forme d'un alliage homogène.

3. Conducteur chauffant selon la revendication 1,
**caractérisé en ce que**
le platine et les autres métaux nobles se présentent sous la forme d'un alliage hétérogène.

4. Conducteur chauffant selon la revendication 1,
**caractérisé en ce que**
l'oxyde métallique est de l'oxyde d'aluminium.

5. Conducteur chauffant selon la revendication 1,
**caractérisé en ce que**
le cermet présente une composition de 6,6 % en poids de Rh, 3,3 % en poids d'Au, 2 % en poids de Al₂O₃ et 88,1 % en poids de Pt.

6. Conducteur chauffant selon la revendication 1,
**caractérisé en ce que**
le cermet présente une composition de 6,6 % en poids de Rh, 3,3 % en poids d'Au, 9,4 % en poids de Al₂O₃ et 80,7 % en poids de Pt.

7. Procédé de fabrication d'un conducteur chauffant destiné à un capteur de mesure pour déterminer une concentration d'oxygène, en particulier dans les gaz d'échappement de moteurs à combustion interne, en appliquant sur une feuille céramique une pâte qui, donnant un conducteur chauffant, comprend une poudre de platine et une poudre d'oxyde métallique, puis en frittant la pâte,
**caractérisé en ce que**
cette pâte comprend au moins deux autres métaux nobles ou un alliage au moins ternaire de platine-métal noble, ces métaux étant choisis parmi le groupe constitué de Pd, Rh, Au, Ag et Ir, le cermet présente une composition de
(a) 0,5 à 50 % en poids d'oxyde métallique,
(b) 35 à 95 % en poids de platine,
(c) 05 à 30 % en poids des, au moins deux, autres métaux nobles,
les quantités indiquées étant rapportées à la quantité totale des composants (a), (b) et (c), et on choisit une température de frittage en fonction d'au moins une température de fusion des métaux nobles ou de l'alliage de platine-métal noble.

8. Procédé selon la revendication 7,
**caractérisé en ce que**
le frittage est réalisé dans un four de frittage et un échange d'air a lieu dans la zone de la feuille céramique pendant le frittage.

9. Procédé selon la revendication 8,
**caractérisé en ce que**
le four de frittage présente une zone de condensation dans laquelle des métaux nobles gazeux se séparent.

10. Procédé selon la revendication 7,
**caractérisé en ce que**
le four de frittage présente pendant le frittage un gradient de température dans la zone de la feuille céramique, et la température est la plus basse dans la zone de la pâte formant le conducteur chauffant (10).

11. Procédé selon les revendications 7 à 10,
**caractérisé en ce que**
les métaux nobles sont ajoutés sous la forme de poudre à la pâte.

12. Procédé selon les revendications 7 à 10,
**caractérisé en ce que**
les métaux nobles sont appliqués par procédés chimiques ou broyage sur une surface des grains de la poudre de platine.

13. Procédé selon les revendications 7 à 10,
**caractérisé en ce que**
le platine et les métaux nobles sont ajoutés à la pâte sous la forme d'un alliage ternaire pulvérisé de platine-métal noble.
